# EUROPEAN PATENT APPLICATION

(11) **EP 4 778 971 A1**
(43) Date of publication of application: **22.07.2026**
(21) Application number: 24865444.4
(22) Date of filing: 10.09.2024
(51) Int. Cl.: C08L 23/02, C08K 3/22, C08L 23/26

(54) **OLEFIN-BASED RESIN COMPOSITION AND USE THEREOF**

(30) Priority: 13.09.2023 JP 2023148677
(71) Applicant: Mitsui Chemicals, Inc., Tokyo 104-0028 (JP)
(72) Inventor: SAHARA, Kenichi, Sodegaura-shi, Chiba 299-0265 (JP); AKIYAMA, Satoshi, Sodegaura-shi, Chiba 299-0265 (JP); MORI, Akihide, Sodegaura-shi, Chiba 299-0265 (JP); OKUMURA, Hiroshi, Sodegaura-shi, Chiba 299-0265 (JP)
(74) Representative: J A Kemp LLP
(86) International application number: PCT/JP2024/032386
(87) International publication number: WO 2025/057944

(57) **Abstract**

An olefin-based resin composition including:
9.7 to 36 parts by mass of an unmodified olefin-based polymer (A),
0.3 to 15 parts by mass of an acid-modified propylene-based polymer (B), and
54 to 90 parts by mass of a metal oxide (C), provided that a total amount of the unmodified olefin-based polymer (A), the acid-modified propylene-based polymer (B), and the metal oxide (C) is 100 parts by mass; and
0.1 to 10 parts by mass of an unmodified polyolefin-based wax (D), relative to a total of 100 parts by mass of the unmodified olefin-based polymer (A), the acid-modified propylene-based polymer (B), and the metal oxide (C).

## Description

### TECHNICAL FIELD

The present invention relates to an olefin-based resin composition containing a metal oxide and use thereof.

### BACKGROUND ART

Olefin-based polymers are molded by various methods and used in many fields. On the other hand, polyolefins such as polypropylene have inferior mechanical physical properties such as heat resistance, rigidity, and tensile strength compared to engineering plastics such as polyamide and polycarbonate, and therefore inorganic fillers such as talc, and heat-resistant fibers such as glass fibers and carbon fibers are added as reinforcements depending on the use.

For example, Patent Literature 1 proposes a polyolefin composition containing a large amount, 20 to 80 parts by weight of an inorganic filler formed of an inorganic compound, and teaches that addition of a silane-modified polyolefin improves moldability and achieves an effect of preventing sheet sagging.

On the other hand, the kneadability with polyolefins was found to be inferior when inorganic compounds such as metal oxides are contained in large quantities, and to improve the kneadability, for example, Patent Literature 2 proposes to add 0.1 to 20 parts by mass of a modified polyolefin-based wax to a composition containing 10 to 50 parts by mass of a thermoplastic resin and 50 to 90 parts by mass of a metal oxide.

### CITATION LIST

### PATENT LITERATURE

Patent Literature 1: JP S52(1977)-15542A
Patent Literature 2: WO2017/209215
Patent Literature 3: WO2023/282327

### SUMMARY OF INVENTION

### TECHNICAL PROBLEM

However, it was found that with olefin-based resin compositions obtained by adding modified polyolefin-based waxes, the hydroxyl group density on the surface of the resulting molded article tends to be relatively high, which increases hydrophilicity and gives it a moist texture, and that under certain conditions (such as acid solutions), inorganic compounds may elute, causing a loss of texture.

In such a situation, the applicants of the present application have discovered that a resin composition containing a thermoplastic resin such as polyolefin, a metal oxide, and an unmodified polyolefin-based wax is excellent in non-water absorbency and hard texture, and have proposed this (see Patent Literature 3). However, further improvement from the viewpoint of strength is desired for application to a variety of uses.

An object of the present invention is to provide an olefin-based resin composition, which does not lead to an increase in hydrophilicity (low water absorbency), has hard texture, has a premium texture closer to earthenware, and is suitable for obtaining a molded article excellent in strength, and a molded article containing the same.

### SOLUTION TO PROBLEM

The present invention relates to, for example, the following items [1] to [15].
[1] An olefin-based resin composition comprising:
   9.7 to 36 parts by mass of an unmodified olefin-based polymer (A),
   0.3 to 15 parts by mass of an acid-modified propylene-based polymer (B), and
   54 to 90 parts by mass of a metal oxide (C), provided that a total amount of the unmodified olefin-based polymer (A), the acid-modified propylene-based polymer (B), and the metal oxide (C) is 100 parts by mass; and
   0.1 to 10 parts by mass of an unmodified polyolefin-based wax (D), relative to a total of 100 parts by mass of the unmodified olefin-based polymer (A), the acid-modified propylene-based polymer (B), and the metal oxide (C).
[2] The olefin-based resin composition according to [1], wherein the unmodified olefin-based polymer (A) is one or more selected from the group consisting of ethylene-based polymers, propylene-based polymers, 1-butene-based polymers, and 4-methyl-1-pentene-based polymers.
[3] The olefin-based resin composition according to [1] or [2], wherein the metal oxide (C) includes magnesium oxide.
[4] The olefin-based resin composition according to any one of [1] to [3], wherein a thermal conductivity of the metal oxide (C) is within a range of 10 to 300 W/mK.
[5] The olefin-based resin composition according to any one of [1] to [4], wherein a thermal conductivity of the olefin-based resin composition is within a range of 0.5 to 5 W/mK.
[6] The olefin-based resin composition according to any one of [1] to [5], wherein a specific gravity of the olefin-based resin composition is within a range of 1.2 to 5.0.
[7] The olefin-based resin composition according to any one of [1] to [6], wherein a content of an unsaturated carboxylic acid in the olefin-based resin composition is 0.002 to 0.42 parts by mass, relative to a total of 100 parts by mass of the unmodified olefin-based polymer (A), the acid-modified propylene-based polymer (B), the metal oxide (C), and the unmodified polyolefin-based wax (D).
[8] A molded article comprising the olefin-based resin composition according to any one of [1] to [7].
[9] A door handle, door knob, handrail or switch comprising the olefin-based resin composition according to any one of [1] to [7].
[10] A case comprising the olefin-based resin composition according to any one of [1] to [7].
[11] A power storage device comprising the olefin-based resin composition according to any one of [1] to [7].
[12] A fashion accessory comprising the olefin-based resin composition according to any one of [1] to [7].
[13] Stationery comprising the olefin-based resin composition according to any one of [1] to [7].
[14] A container, tableware, or alcoholic drink ware comprising the olefin-based resin composition according to any one of [1] to [7].
[15] A mouse or keyboard comprising the olefin-based resin composition according to any one of [1] to [7].

### Advantageous Effects of Invention

An olefin-based resin composition of the present invention has an extremely low water absorption rate and excellent non-water absorption, has cool tactile sensation because it has a thermal conductivity equivalent to that of earthenware, has hard texture, texture closer to that of earthenware, and premium texture, and is suitable for obtaining a molded article excellent in strength such as surface hardness, tensile strength, impact strength, and bending strength. A molded article of the present invention can be suitably applied to a variety of applications, such as door handles, door knobs, handrails or switches, cases for, for example, home appliances, power storage (capacitor) devices, fashion accessories, containers, stationery, tableware, alcoholic drink ware, and mice or keyboards. It has an extremely low water absorption rate and excellent non-water absorption, has cool tactile sensation, has texture closer to that of earthenware such as hard texture, and can be suitably used for applications that are touched by hand.

### DESCRIPTION OF EMBODIMENTS

Hereinafter, the present invention will be specifically described.

In the present specification, the term "polymer" includes both a homopolymer and a copolymer unless otherwise specified.

### [Olefin-based resin composition]

An olefin-based resin composition of the present invention contains, as essential components, an unmodified olefin-based polymer (A), an acid-modified propylene-based polymer (B), a metal oxide (C), and an unmodified polyolefin-based wax (D).

### <Unmodified olefin-based polymer (A)>

An unmodified olefin-based polymer (A) constituting the olefin-based resin composition of the present invention (hereinafter, simply also referred to as an olefin-based polymer (A)) is an olefin-based polymer that is not subjected to acid modification or graft modification, and is a homopolymer of α-olefin (including ethylene) such as ethylene, propylene, 1-butene, and 4-methyl-1-pentene, a copolymer of the α-olefin and another α-olefin, and a copolymer of the α-olefin and a monomer other than α-olefin, where α-olefin is the main component.

As the monomer constituting the olefin-based polymer (A) (for example, α-olefin such as propylene), any of a material derived from fossil fuels, a material derived from biomass, and a material derived from a chemically recycled material can be used.

As a raw material monomer of the olefin-based polymer (A), a raw material derived from fossil fuels and a raw material derived from biomass may be used in combination,
a raw material derived from fossil fuels and a raw material derived from a chemically recycled material may be used in combination,
a raw material derived from biomass and a raw material derived from a chemically recycled material may be used in combination, and
a raw material derived from fossil fuels, a raw material derived from biomass, and a raw material derived from a chemically recycled material may be used in combination.

Specific examples of the olefin-based polymer (A) according to the present invention include, for example, the following polymers (A1) to (A4).

### <Ethylene-based polymer (A1)>

The ethylene-based polymer (A1) is a homopolymer of ethylene, or a copolymer of ethylene and an α-olefin having 3 to 20 carbon atoms, and usually includes polymers containing structural units derived from ethylene as the main component (containing 51 to 100 mol% of ethylene), which are referred to as high density polyethylene (HDPE), medium density polyethylene (MDPE), low density polyethylene (LDPE), linear low density polyethylene (LLDPE), and ethylene-α-olefin copolymer. Specific examples of the α-olefins having 3 to 20 carbon atoms to be copolymerized with ethylene include propylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, 2-methyl-1-butene, 3-methyl-1-butene, 3,3-dimethyl-1-butene, and 3,5,5-trimethyl-1-hexene. Of these, α-olefins having 3 to 10 carbon atoms are preferred, α-olefins having 3 to 8 carbon atoms are more preferred, and particularly, ethylene, 1-butene, 1-hexene, 4-methyl-1-pentene, and 1-octene are even more preferred. The molar ratio of ethylene to α-olefin (ethylene/α-olefin) is preferably 99/1 to 60/40, more preferably 95/5 to 70/30, and even more preferably 90/10 to 60/25.

Suitable specific examples of ethylene-α-olefin copolymers include ethylene-propylene copolymer, ethylene-1-butene copolymer, ethylene-1-hexene copolymer, ethylene-4-methyl-1-pentene copolymer, ethylene-1-octene copolymer, ethylene-propylene-1-butene copolymer, and ethylene-propylene-1-octene copolymer. Of these, ethylene-propylene copolymer, ethylene-1-butene copolymer, ethylene-1-hexene copolymer, ethylene-4-methyl-1-pentene copolymer, and ethylene-1-octene copolymer are preferred, and ethylene-1-butene copolymer is more preferred.

The density (measured according to JIS K7112) of the ethylene-based polymer (A1) is preferably 850 to 980 kg/m³, more preferably 855 to 978 kg/m³, even more preferably 860 to 976 kg/m³, and particularly preferably 862 to 973 kg/m³.

When the olefin-based resin composition of the present invention contains the ethylene-based polymer (A1), the molded article obtained from the olefin-based resin composition tends to have a higher thermal conductivity than when it contains the propylene-based polymer (A2) described below, to have excellent warm-cold sensation, and to produce a high sound when tapped. Such molded article can be suitably used for various applications without any limitation, but can be suitably used, for example, as a base material for surface modification by metal vapor deposition.

### <Propylene-based polymer (A2)>

The propylene-based polymer (A2) is a polymer containing structural units derived from propylene as the main component (containing 51 to 100 mol% of propylene), such as a homopolymer of propylene (propylene homopolymer: homo PP), a copolymer of propylene and ethylene and/or an α-olefin having 4 to 20 carbon atoms (random copolymer: random PP), and a composition of a homopolymer of propylene and an ethylene-propylene copolymer (block copolymer: block PP). Specific examples of the α-olefin in the propylene-α-olefin copolymer include ethylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, 2-methyl-1-butene, 3-methyl-1-butene, 3,3-dimethyl-1-butene, 3-methyl-1-hexene, and 3,5,5-trimethyl-1-hexene. Of these, ethylene and α-olefins having 4 to 10 carbon atoms are preferred, ethylene and α-olefins having 4 to 8 carbon atoms are more preferred, and ethylene, 1-butene, 1-hexene, 4-methyl-1-pentene, 1-octene are even more preferred, and ethylene is particularly preferred. The molar ratio of propylene to α-olefin (propylene/α-olefin) is preferably 99/1 to 60/40, more preferably 95/5 to 70/30, and even more preferably 90/10 to 70/30.

Suitable specific examples of propylene-α-olefin copolymers (random PP) include propylene-ethylene copolymer, propylene-1-butene copolymer, propylene-1-hexene copolymer, propylene-4-methyl-1-pentene copolymer, propylene-1-octene copolymer, and propylene-ethylene-1-butene copolymer. Of these, propylene-ethylene copolymer and propylene-1-butene copolymer are preferred, and propylene-ethylene copolymer is particularly preferred.

In the case of a propylene homopolymer, the preferred melting point is 155 to 170°C, more preferably 158 to 165°C.

In the case of a propylene-ethylene random copolymer, the ethylene content of the propylene-ethylene random copolymer is preferably 1.9 to 5.4% by mass, more preferably 2.0 to 4.8% by mass. The crystalline melting point of the propylene-ethylene random copolymer, as measured by a differential scanning calorimeter (DSC) in accordance with JIS K7121, is preferably usually 130 to 150°C, more preferably 130 to 145°C, and particularly preferably 135 to 145°C.

The density (measured according to JIS K7112) of the propylene-based polymer (A2) is preferably 850 to 910 kg/m³, more preferably 875 to 909 kg/m³, and more preferably 890 to 908 kg/m³.

As the propylene-based polymer (A2), for example, the propylene-ethylene block copolymer and the propylene-ethylene random copolymer may be used singly, or two or more copolymers in mixture may be used. For example, two or more copolymers can be mixed for MFR adjustment.

When the olefin-based resin composition of the present invention contains the propylene-based polymer (A2) as the olefin-based polymer (A), the molded article obtained from the olefin-based resin composition of the present invention can be suitably used for various applications without any limitation. While it has a thermal conductivity close to that of earthenware and a specific gravity equivalent to that of earthenware, it does not break like earthenware upon impact such as from falling, making it highly safe, and therefore can be suitably used for applications that are touched by hand, for example, tableware such as cups, containers, and door handles.

### <1-Butene-based polymer (A3)>

The 1-butene-based polymer (A3) is a polymer containing structural units derived from 1-butene as the main component (containing 51 to 100 mol% of 1-butene), such as a homopolymer of 1-butene (polybutene) and copolymers of 1-butene with ethylene, propylene, and α-olefins having 5 to 20 carbon atoms (1-butene-α-olefin copolymers).

### <4-Methyl-1-pentene-based polymer (A4)>

The 4-methyl-1-pentene-based polymer (A4) is a polymer containing structural units derived from 4-methyl-1-pentene as the main component (containing 51 to 100 mol% of 4-methyl-1-pentene), such as a homopolymer of 4-methyl-1-pentene and copolymers of 4-methyl-1-pentene and α-olefins having 2 to 20 carbon atoms (excluding 4-methyl-1-pentene) (4-methyl-1-pentene-α-olefin copolymers).

Specific examples of the α-olefin in the 4-methyl-1-pentene-α-olefin copolymer include linear α-olefins having 2 to 20 carbon atoms (preferably 2 to 15 carbon atoms, more preferably 2 to 10 carbon atoms) such as ethylene, propylene, 1-butene, 1-pentene, 1-hexene, 1-octene, 1-decene, 1-undecene, 1-dodecene, 1-tetradecene, 1-hexadecene, 1-octadecene, and 1-eicosene; and branched α-olefins having 5 to 20 carbon atoms (preferably 5 to 15 carbon atoms) such as 3-methyl-1-butene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, and 3-ethyl-1-hexene. Of these, ethylene, propylene, 1-butene, 1-pentene, 1-hexene and 1-octene are preferred, and ethylene and propylene are particularly preferred. The α-olefin may be derived from one of these compounds or from two or more thereof.

The molar ratio of 4-methyl-1-pentene to α-olefin (4-methyl-1-pentene/α-olefin) is preferably 55/45 to 90/10, more preferably 60/40 to 86/14 and even more preferably 68/32 to 85/15.

In one embodiment, the 4-methyl-1-pentene-based polymer (A4) has a temperature of 0°C or more and 60°C or less, preferably 10°C or more and 50°C or less, more preferably 20°C or more and 45°C or less, and particularly preferably 25°C or more and 44°C or less, at which the loss tangent (tan δ), obtained by dynamic viscoelastic measurement at a frequency of 10 rad/s (1.6 Hz) reaches its peak value within a temperature range of -40 to 150°C.

In the 4-methyl-1-pentene-based polymer (A4), the peak value of the above tan δ is 0.6 or more and 5.0 or less. This peak value of tan δ is preferably 0.7 or more and 4.5 or less, and more preferably 0.8 or more and 3.5 or less.

The tan δ can be calculated as the ratio of the storage modulus (G') to the loss modulus (G") (G"/G': loss tangent) using the storage modulus (G') and the loss modulus (G") obtained when the dynamic viscoelasticity is measured.

In the present invention, the temperature at which tan δ reaches its peak value (maximum value) in the range of -40 to 150°C is defined as the temperature at which the above tan δ reaches its peak value (hereinafter referred to as "tan δ peak temperature"), and the value of tan δ at that time is defined as the peak value of the above tan δ (hereinafter referred to as "tan δ peak value"). The above peak is thought to be derived from the glass transition temperature of the 4-methyl-1-pentene-based polymer (A4).

In other aspects, the 4-methyl-1-pentene-based polymer (A4) has a tan δ peak temperature of preferably 15°C or more and 45°C or less, obtained by dynamic viscoelastic measurement at a frequency of 10 rad/s (1.6 Hz) within a temperature range of -40 to 150°C. In terms of the lower limit of the tan δ peak temperature, the tan δ peak temperature is more preferably 20°C or more, and even more preferably 25°C or more. In an exemplary aspect of the present invention, the tan δ peak temperature is 40°C or less, but it may exceed 40°C as long as the object of the present invention can be achieved. In a typical aspect of the invention, the tan δ peak temperature is preferably 20°C or more and 45°C or less, and even more preferably 25°C or more and 43°C or less. By having a tan δ peak temperature within the above temperature range, the value of tan δ at room temperature can be further increased.

The 4-methyl-1-pentene-based polymer (A4) has a tan δ peak value of preferably 0.6 or more and 5.0 or less, more preferably 1.0 or more and 4.8 or less, even more preferably 1.3 or more and 4.5 or less, and particularly preferably 1.8 or more and 4.0 or less, obtained by dynamic viscoelastic measurement at a frequency of 10 rad/s (1.6 Hz) within a temperature range of -40 to 150°C. By having a tan δ peak value within the above range, the vibration absorption, material hardness and followability can be varied depending on the rate of tension and deformation.

The 4-methyl-1-pentene-based polymer (A4) has a melting point (Tm), as measured by a differential scanning calorimeter (DSC), of preferably 160°C or less or not observed, more preferably 140°C or less or not observed, and even more preferably not observed. Meeting such requirements can improve the kneadability with inorganic materials such as metal oxides (C) in the resin composition of the present invention and to improve vibration absorption and stress relaxation properties.

The intrinsic viscosity [η] of the 4-methyl-1-pentene-based polymer (A4) measured in decalin at 135°C is preferably 0.1 dL/g or more and 5.0 dL/g or less, more preferably 0.5 dL/g or more and 4.0 dL/g or less, and even more preferably 0.5 dL/g or more and 3.5 dL/g or less. The intrinsic viscosity [η] of the 4-methyl-1-pentene-based polymer (A4) is within the above range, a molded article is easily produced.

The above intrinsic viscosity [η] of the 4-methyl-1-pentene-based polymer (A4) can be adjusted to the above range by adding hydrogen during production by polymerization to control the molecular weight and polymerization activity.

The above intrinsic viscosity [η] can be obtained by determining the viscosity increase rate ηsp per unit concentration c (i.e., ηsp/c) of each polymer, when different amounts of the olefin-based resin compositions are dissolved in decalin at 135°C, to obtain the reduced viscosity ηred, and then extrapolating ηred so that the unit concentration c of the polymer is zero.

The ratio of the weight-average molecular weight (Mw) to the number-average molecular weight (Mn) of the 4-methyl-1-pentene-based polymer (A4) (molecular weight distribution: Mw/Mn) measured by gel permeation chromatography (GPC) is preferably 1.0 or more and 3.5 or less, more preferably 1.2 or more and 3.0 or less, and even more preferably 1.5 or more and 2.8 or less. When the above Mw/Mn of the 4-methyl-1-pentene-based polymer (A4) is within the above range, a decrease in moldability caused by a low-molecular-weight and low-stereoregularity polymer is less likely to occur, and molding is easily achieved.

In addition, the weight-average molecular weight (Mw) of the 4-methyl-1-pentene-based polymer (A4) measured by gel permeation chromatography (GPC) is preferably 500 or more and 10,000,000 or less, more preferably 1,000 or more and 5,000,000 or less, and even more preferably 1,000 or more and 2,500,000 or less, in terms of polystyrene.

The Mw/Mn and the Mw of the 4-methyl-1-pentene-based polymer (A4) can be adjusted to the above ranges, for example, by using a metallocene catalyst.

The above Mw and Mw/Mn can be determined, for example, by analyzing the chromatograms obtained by measuring at a flow rate of 1.0 ml/min at 140°C using ALC/GPC 150-C plus type (integrated differential refractor detector) made by Waters as a liquid chromatograph, two GMH6-HTs and two GMH6-HTLs made by Tosoh Corporation connected in series as columns, and o-dichlorobenzene as a mobile phase medium, using a calibration curve using a standard polystyrene sample.

The density (measured according to JIS K7112) of the 4-methyl-1-pentene-based polymer (A4) is preferably 870 to 830 kg/m³, more preferably 865 to 830 kg/m³, and even more preferably 855 to 830 kg/m³.

The density can be appropriately varied according to the comonomer composition ratio of the 4-methyl-1-pentene-based polymer (A4), and a polymer (A4) whose density is within the above range is advantageous in producing a molded article.

When the olefin-based resin composition of the present invention contains the 4-methyl-1-pentene-based polymer (A4), the molded article obtained from the olefin-based resin composition can be suitably used for various applications without any limitation. Such a molded article has superior flexibility compared to when the propylene-based polymer (A2) is contained, and has properties such as easily bending when touched and retaining its shape at room temperature by imparting it heat conducting characteristics.

In the olefin-based resin composition of the present invention, the unmodified olefin-based polymer (A) is preferably one or more polymers selected from the group consisting of the above-mentioned (A1) to (A4), and the unmodified olefin-based polymer (A) more preferably contains one or more of the ethylene-based polymer (A1) and the propylene-based polymer (A2). Furthermore, when the unmodified olefin-based polymer (A) contains the ethylene-based polymer (A1) and the propylene-based polymer (A2), the resulting molded article preferably has well-balanced mechanical physical properties. When the unmodified olefin-based polymer (A) is formed of the propylene-based polymer (A2), the resulting molded article is preferably excellent in heat resistance.

The MFR (ASTM D1238, 230°C, 2.16 kg load) of the olefin-based polymer (A) is preferably 9 to 300 g/10 min, and more preferably 10 to 200 g/10 min. An olefin-based polymer (A) having an MFR in the above range has good moldability such as injection moldability, and the resulting molded article has also good mechanical physical properties.

When the olefin-based polymer (A) is the ethylene-based polymer (A1), the MFR (ASTM D1238, 190°C, 2.16 kg load) is preferably 6 to 100 g/10 min. In terms of the lower limit of the MFR, it is preferably 8 g/10 min or more, more preferably 10 g/10 min or more, and even more preferably 11 g/10 min or more. Moreover, in terms of the upper limit of the MFR, it is preferably 80 g/10 min or less, more preferably 60 g/10 min or less, and even more preferably 50 g/10 min or less.

When the olefin-based polymer (A) is the ethylene-based polymer (A1), the propylene-based polymer (A2), and the 1-butene-based polymer (A3), the MFR (ASTM D1238, 230°C, 2.16 kg load) is preferably 20 to 150 g/10 min, more preferably 30 to 100 g/10 min, and even more preferably 40 to 80 g/10 min.

When the olefin-based polymer (A) is the 4-methyl-1-pentene-based polymer (A4), the upper limit of the MFR (ASTM D1238, 230°C, 2.16 kg load) is preferably 50 g/10 min or less, more preferably 30 g/10 min or less, even more preferably 15 g/10 min or less, and particularly preferably 13 g/10 min or less.

### <Acid-modified propylene-based polymer (B)>

The acid-modified propylene-based polymer (B), which is one of the components contained in the olefin-based resin composition of the present invention, improves the compatibility and adhesion between the unmodified olefin-based polymer (A) and the metal oxide (C). The acid-modified propylene-based polymer (B) enhances the compatibility thereof, and therefore fine dispersion of the metal oxide (C) is easily achieved, thereby improving the processability, heat resistance, mechanical strength, and appearance of the molded article.

The acid-modified propylene-based polymer (B) is obtained by modifying an unmodified propylene-based polymer by a known method.

The kind of the unmodified propylene-based polymer, which is a raw material of the acid-modified propylene-based polymer (B), is not particularly limited. The unmodified propylene-based polymer is a polymer containing 51 to 100 mol% of a structural unit derived from propylene, and examples thereof include, for example, propylene homopolymers and propylene-α-olefin copolymers. Specific examples of the α-olefin in the propylene-α-olefin copolymer include ethylene, 1-butene, 1-pentene, 2-methyl-1-butene, 3-methyl-1-butene, 1-hexene, 3-methyl-1-pentene, 4-methyl-1-pentene, 3,3-dimethyl-1-butene, 1-heptene, 1-octene, 1-decene, 1-dodecene, 1-tetradecene, 1-hexadecene, and 1-octadecene. As specific suitable examples of the unmodified propylene-based polymer, propylene homopolymers, propylene-ethylene random copolymers, propylene-1-butene random copolymers, and propylene-ethylene -1-butene random copolymers are preferred, and propylene homopolymers are more preferred.

The unsaturated carboxylic acid used for modifying the unmodified propylene-based polymer may be an unsaturated compound having one or more carboxylic acid groups (unsaturated carboxylic acid in the narrow sense) or may be a derivative of unsaturated carboxylic acid such as esters of unsaturated carboxylic acid and alkyl alcohol or unsaturated compounds having carboxylic acid anhydride such as anhydrides of unsaturated carboxylic acid. Examples of the unsaturated group contained in these unsaturated carboxylic acids can include a vinyl group, a vinylene group, and an unsaturated cyclic hydrocarbon group. Examples of the unsaturated carboxylic acid in the narrow sense include acrylic acid, methacrylic acid, maleic acid, fumaric acid, tetrahydrophthalic acid, itaconic acid, citraconic acid, crotonic acid, nadic acid, and endocis-bicyclo[2,2,1]hept-5-ene-2,3-dicarboxylic acid. Examples of the derivative of unsaturated carboxylic acid include acid anhydrides such as maleic anhydride and citraconic anhydride, and acid halides, amidated products, imidated products, and esterified products of unsaturated carboxylic acids (in the narrow sense) such as maleic chloride, maleic imide, monomethyl maleate, and dimethyl maleate. The unsaturated carboxylic acid is preferably maleic acid, nadic acid, or an acid anhydride thereof, and more preferably maleic anhydride. These unsaturated carboxylic acids may be used singly or in combinations of two or more thereof.

As the monomer constituting the acid-modified propylene-based polymer (B) (propylene, α-olefin excluding propylene, unsaturated carboxylic acids), any of a material derived from fossil fuels, a material derived from biomass, and a material derived from a chemically recycled material can be used.

As a monomer constituting the acid-modified propylene-based polymer (B), a raw material derived from fossil fuels and a raw material derived from biomass may be used in combination,
a raw material derived from fossil fuels and a raw material derived from a chemically recycled material may be used in combination,
a raw material derived from biomass and a raw material derived from a chemically recycled material may be used in combination, and
a raw material derived from fossil fuels, a raw material derived from biomass, and a raw material derived from a chemically recycled material may be used in combination.

When the unmodified propylene-based polymer is modified by the above-mentioned unsaturated carboxylic acid, an organic peroxide as a radical initiator is usually used. Examples of the organic peroxide include di-n-propyl peroxydicarbonate, diisopropyl peroxydicarbonate, di-sec-butyl peroxydicarbonate, t-hexyl peroxyneodecanoate, t-butyl peroxyneodecanoate, t-amyl peroxyneodecanoate, t-butyl peroxyneoheptanoate, t-hexylperoxypivalate, t-butyl peroxypivalate, t-amyl peroxypivalate, t-hexylperoxy-2-ethylhexanoate, t-butyl peroxy-2-ethylhexanoate, t-amyl peroxy-2-ethylhexanoate, t-butyl peroxyisobutyrate, 1,1-di(t-butyl peroxy)-2-methylcyclohexane, 1,1-di(t-hexylperoxy)-3,3,5-trimethylcyclohexane, 1,1-di(t-hexylperoxy)cyclohexane, 1,1-di(t-butyl peroxy)cyclohexane, 1,1-di(t-amyl peroxy)cyclohexane, 2,2-di(4,4-di-(t-butyl peroxy)cyclohexyl)propane, t-amyl peroxyisonanoate, t-hexylperoxy isopropyl monocarbonate, t-amyl peroxynormaloctoate, t-butyl peroxymaleic acid, t-butyl peroxy-3,5,5-trimethylhexanoate, t-butyl peroxylaurate, t-amyl peroxy isopropyl monocarbonate, t-butyl peroxy isopropyl monocarbonate, t-amyl peroxy-2-ethylhexyl monocarbonate, t-butyl peroxy-2-ethylhexyl monocarbonate, t-hexylperoxybenzoate, t-butyl peroxyacetate, t-amyl peroxyacetate, 2,2-di-(t-butyl peroxy)butane, t-butyl peroxyisonanoate, t-amyl peroxybenzoate, t-butyl peroxybenzoate, n-butyl-4,4-di-(t-butyl peroxy)valerate, methyl ethyl ketone peroxide, di(2-t-butyl peroxyisopropyl)benzene, ethyl-3,3-di(t-butyl peroxy) butyrate, di-t-hexyl peroxide, 1,3-di(2-t-butyl peroxyisopropyl)benzene, 2,5-dimethyl-2,5-di-(t-butyl peroxy)hexane, t-butyl cumyl peroxide, di-t-amyl peroxide, di-t-butyl peroxide, 2,5-dimethyl-2,5-di-(t-butyl peroxy)hexyne-3, t-amyl hydroperoxide, t-butyl hydroperoxide, 1,1-bis(t-butyl peroxy)-3,3,5-trimethylcyclohexane, and 1,1-di(t-butyl peroxy)-3,3,5-trimethylcyclohexane. Among these, 2,5-dimethyl-2,5-di-(t-butyl peroxy)hexane, di-t-butyl peroxide, t-butyl peroxy isopropyl monocarbonate, 2,5-dimethyl-2,5-bis(tert-butyl peroxy)hexyne-3, dicumyl peroxide, and t-butyl peroxybenzoate are preferred. These organic peroxides may be used singly or in combinations of two or more thereof.

The amount of the organic peroxide used at modification can be 0.01 parts by mass or more and 30 parts by mass or less, and is preferably 1 part by mass or more and 20 parts by mass or less, and more preferably 2 parts by mass or more and 15 parts by mass or less, relative to 100 parts by mass of the unmodified propylene-based polymer.

The amount of the unsaturated carboxylic acid contained in the acid-modified propylene-based polymer (B) is preferably 0.005 mass% or more and 10 mass% or less, more preferably 0.01 mass% or more and 5 mass% or less, and even more preferably 0.02 mass% or more and 3 mass% or less, relative to the total mass of the acid-modified propylene-based polymer (B).

The amount of the unsaturated carboxylic acid in the olefin-based resin composition of the present invention desirably is within a range of preferably 0.002 to 0.42 parts by mass, more preferably 0.005 to 0.35 parts by mass, and even more preferably 0.01 to 0.1 parts by mass, relative to the total of 100 parts by mass of the unmodified olefin-based polymer (A), the acid-modified propylene-based polymer (B), the metal oxide (C), and the unmodified polyolefin-based wax (D). Here, the amount of the unsaturated carboxylic acid usually means the amount of the unsaturated carboxylic acid contained in the acid-modified propylene-based polymer (B). That is, the olefin-based resin composition of the present invention preferably contains the acid-modified propylene-based polymer (B) in such an amount that the unsaturated carboxylic acid is contained in the above-mentioned amount. The content of the unsaturated carboxylic acid in the olefin-based resin composition of the present invention falling within the above range is suitable because compatibility and adhesiveness between the unmodified olefin-based polymer (A) and the metal oxide (C) in a resin composition are enhanced, and therefore a molded article excellent in texture and strength, is easily obtained from the resin composition.

The density (measured according to JIS K7112) of the acid-modified propylene-based polymer (B) is preferably 860 to 930 kg/m³, more preferably 880 to 925 kg/m³, and even more preferably 890 to 920 kg/m³.

The number-average molecular weight (Mn) of the acid-modified propylene-based polymer (B) measured by gel permeation chromatography (GPC) is preferably 2,000 or more and 60,000 or less, more preferably 7,000 or more and 50,000 or less, and even more preferably 10,000 or more and 45,000 or less, in terms of polystyrene. The acid-modified propylene-based polymer (B) having a number-average molecular weight (Mn) falling within the above range can increase the dispersibility of the metal oxide (C) in the resin composition well, and appearance, heat resistance, and mechanical strength of a molded article can be further improved. In addition, processability and kneadability of the resin composition become better.

### <Metal oxide (C)>

The kind of the metal oxide (C), which is one of the components in the olefin-based resin composition of the present invention, is not particularly limited as long as it is an oxide of a metal, but it should be a metal oxide having a higher thermal conductivity than the olefin-based polymer (A). For example, metal oxides such as magnesium oxide (45 to 60 W/mK), aluminum oxide (17 to 36.0 W/mK), zinc oxide (25 to 54 W/mK), and titanium oxide (8.4 W/mK) can be used. Two or more of metal oxides may be used in combination. The values in parentheses after the substance name indicate the value of the thermal conductivity at 300 K.

The metal oxide (C) according to the present invention is preferably a metal oxide having a thermal conductivity in the range of 10 to 300 W/mK. The lower limit of the thermal conductivity is more preferably 15 W/mK, even more preferably 20 W/mK, particularly preferably 30 W/mK, and most preferably 40 W/mK.

Moreover, the upper limit of the thermal conductivity is more preferably 250 W/mK, even more preferably 200 W/mK, and particularly preferably 100 W/mK.

Using the metal oxide (C) having a thermal conductivity in the above range allows the olefin-based resin composition obtained by mixing with the unmodified olefin-based polymer (A) or the acid-modified propylene-based polymer (B) to have an appropriate thermal conductivity, and therefore to obtain a molded article such as a container that feels cool to the touch and warm when something hot is placed in it.

Unlike the case where titanium oxide is used as a photocatalyst, the metal oxide (C) is preferably magnesium oxide or zinc oxide for applications where light irradiation is unnecessary and antibacterial and/or antiviral properties are required, and furthermore, more preferably magnesium oxide as it is white, easy to color, and low cost.

The shape of the metal oxide (C) according to the present invention can be, for example, spherical, cubic, plate-like, columnar, or hexagonal-plate-like, of which spherical is preferred. The metal oxide (C) can also be pulverized.

The metal oxide (C) according to the present invention preferably has an average particle size in the range of 0.1 to 110 µm. The lower limit of the average particle size is more preferably 0.5 µm, even more preferably 1 µm, and particularly preferably 3 µm. The particle size (average particle size) of the metal oxide (C) is the 50% particle size (d50) obtained from the cumulative % distribution curve measured with a laser diffraction particle size distribution analyzer.

Moreover, the upper limit of the average particle size is more preferably 80 µm, even more preferably 70 µm, and particularly preferably 60 µm.

If the average particle size is too small, it is more likely to aggregate, which may reduce handling properties and make it difficult to uniformly mix with the olefin-based polymer (A). On the other hand, if the average particle size is too large, the thermal conductivity of the resulting olefin-based resin composition may become too low, and the mechanical physical properties of the resulting molded article may also decrease.

Use of a metal oxide (c1) having a small average particle size as the metal oxide (C) is more preferable in terms of the mechanical physical properties of the resulting resin composition and molded article. The average particle size of the metal oxide (c1) is 0.1 µm or more and less than 10 µm, preferably 0.5 µm or more and less than 10 µm, more preferably 1 µm or more and less than 10 µm, and even more preferably 3 µm or more and less than 10 µm. The metal oxide (c1) is preferably a metal oxide pulverized to the above average particle size.

Use of the metal oxide (c2) having a large average particle size as the metal oxide (C) is more preferable in terms of the fluidity and moldability of the resulting resin composition. The average particle size of the metal oxide (c2) is 10 µm or more and 110 µm or less, preferably 10 µm or more and 80 µm or less, more preferably 10 µm or more and 70 µm or less, and even more preferably 10 µm or more and 60 µm or less. The metal oxide (c2) is preferably a spherical metal oxide.

In applications where higher thermal conductivity is required, it is preferable to use, for example, a combination of a metal oxide (c1) and a metal oxide (c2) with different average particle sizes of 0.1 µm or more and less than 10 µm and 10 µm or more and 110 µm or less, respectively. In this case, the formulation ratio (mass ratio) is, for example, preferably (c1)/(c2) = 1/99 to 49/51, more preferably 5/95 to 45/55, and more preferably 10/90 to 40/60.

By using a combination of a metal oxide (c1) with a small average particle size and a metal oxide (c2) with a large average particle size, the metal oxide (c1) fills the gaps between the metal oxides (c2), increasing the packing density and thus improving the thermal conductivity of the resulting olefin-based resin composition.

The aspect ratio of the metal oxide (C) is preferably small from the viewpoint of such as uniformity of heat conduction. Specifically, the aspect ratio is preferably less than 1.2, more preferably less than 1.1.

The metal oxide (C) according to the present invention has preferably been subjected to a waterproof treatment. The metal oxide (C) is preferably substantially free of metal hydroxides, hydrates thereof and hydrates of metal oxides. Specifically, the content of metal hydroxides, hydrates thereof, and hydrates of metal oxides in 100% by mass of the total metal oxide (C) is preferably 1% by mass or less, more preferably 0.5% by mass or less, and particularly preferably 0.3% by mass or less.

### <Unmodified polyolefin-based wax (D)>

The unmodified polyolefin-based wax (D), which is one of the components in the olefin-based resin composition of the present invention, is a low molecular weight polymer and is not particularly limited as long as it is an unmodified wax composed of a polyolefin such as polyethylene wax and polypropylene wax, and is preferably a polyethylene-based wax or a polypropylene-based wax, and is more preferably a polyethylene-based wax.

The unmodified polyolefin-based wax (D) according to the present invention has not been oxidized or modified with, for example, unsaturated carboxylic acids, and is unmodified.

The unmodified polyolefin-based wax (D) according to the present invention preferably has an acid value of 0.01 mg KOH/g or less, and more preferably 0 mg KOH/g, as measured in accordance with JIS K0070.

As the monomer constituting the unmodified polyolefin-based wax (D), any of a material derived from fossil fuels, a material derived from biomass, and a material derived from a chemically recycled material can be used.

As a raw material monomer of the unmodified polyolefin-based wax (D), a raw material derived from fossil fuels and a raw material derived from biomass may be used in combination, a raw material derived from fossil fuels and a raw material derived from a chemically recycled material may be used in combination,
a raw material derived from biomass and a raw material derived from a chemically recycled material may be used in combination, and
a raw material derived from fossil fuels, a raw material derived from biomass, and a raw material derived from a chemically recycled material may be used in combination.

### <Polyethylene-based wax>

The polyethylene-based wax used as the unmodified polyolefin-based wax (D) according to the present invention is a wax composed of, for example, a homopolymer of ethylene or a copolymer of ethylene and an α-olefin. As the α-olefin, α-olefins having 3 to 10 carbon atoms are preferred, α-olefins having 3 to 8 carbon atoms are more preferred, and 1-butene is even more preferred. Examples of the polyethylene-based wax include polymers or copolymers containing an ethylene-derived structural unit as the main component (containing 51 to 100 mol% of ethylene).

The polyethylene-based wax according to the present invention preferably has a density in the range of 890 to 980 kg/m³, more preferably in the range of 895 to 975 kg/m³, as measured in accordance with the density-gradient tube method of JIS K7112 (1999). When the density of the polyethylene-based wax is in such a range, the dispersibility of the polyethylene-based wax in the olefin-based resin composition is improved.

The polyethylene-based wax according to the present invention has a standard polyethylene-equivalent number-average molecular weight (Mn) as measured by gel permeation chromatography of preferably 700 to 4000, and more preferably 1500 to 3800.

The polyethylene-based wax having a number-average molecular weight (Mn) of 700 to 4000 can be appropriately dispersed in the unmodified olefin-based polymer (A) when the olefin-based resin composition of the present invention is prepared, and also contribute to the dispersibility of the metal oxide (C). It can also reduce the extrusion load during molding extrusion. As a result, the productivity of the molded article can be further improved.

The polyethylene-based wax according to the present invention has a standard polyethylene-equivalent weight-average molecular weight (Mw) as measured by gel permeation chromatography of preferably 1000 to 9000, more preferably 1500 to 8000, and even more preferably 2000 to 7000.

The polyethylene-based wax according to the present invention has a melting point of preferably 70 to 130°C, and more preferably 80 to 129°C.

The melting point of the polyethylene-based wax was measured by differential scanning calorimeter (DSC) in accordance with JIS K7121.

### <Polypropylene-based wax>

The polypropylene-based wax used as the unmodified polyolefin-based wax (D) according to the present invention is a wax composed of, for example, a homopolymer of propylene or a copolymer of propylene and ethylene or an α-olefin. As the α-olefin, α-olefins having 4 to 10 carbon atoms are preferred, α-olefins having 4 to 8 carbon atoms are more preferred, and 1-butene is even more preferred. Examples of the polypropylene-based wax include polymers or copolymers containing a propylene-derived structural unit as the main component (containing 51 to 100 mol% of propylene).

The density, number-average molecular weight (Mn), weight-average molecular weight (Mw), and melting point (Tm) of the polypropylene-based wax according to the present invention are not particularly limited, and desirably they each have the same range as those of the preferred properties of the polyethylene-based wax described above.

### <Olefin-based resin composition>

The olefin-based resin composition of the present invention is a composition comprising: the above-described unmodified olefin-based polymer (A) in a range of 9.7 to 36 parts by mass; the acid-modified propylene-based polymer (B) in a range of 0.3 to 15 parts by mass; the metal oxide (C) in a range of 54 to 90 parts by mass (provided that a total (a total of (A) + (B) + (C)) amount of the unmodified olefin-based polymer (A), the acid-modified propylene-based polymer (B), and the metal oxide (C) is 100 parts by mass); and an unmodified polyolefin-based wax (D) in a range of 0.1 to 10 parts by mass, relative to a total of 100 parts by mass of (A) + (B) + (C).

In the olefin-based resin composition of the present invention, when the total amount of (A) + (B) + (C) is 100 parts by mass, the lower limit of the content of the unmodified olefin-based polymer (A) is preferably 11.5 parts by mass, more preferably 13.3 parts by mass, even more preferably 15.1 parts by mass, and still even more preferably 21.1 parts by mass. When the content of the olefin-based polymer (A) in the olefin-based resin composition is a certain amount or more, existing molding methods such as injection molding can be performed.

The upper limit of the content of the unmodified olefin-based polymer (A) is preferably 35 parts by mass, more preferably 33 parts by mass, even more preferably 32 parts by mass, and particularly preferably 26 parts by mass.

When the content of the unmodified olefin-based polymer (A) in the olefin-based resin composition of the present invention is equal to or less than a certain amount, the heat conduction of the resulting olefin-based resin composition is sufficiently exhibited and the resulting molded article has a feeling of weight and texture.

In the olefin-based resin composition of the present invention, when the total amount of (A) + (B) + (C) is 100 parts by mass, the lower limit of the content of the acid-modified propylene-based polymer (B) is preferably 0.3 parts by mass, more preferably 0.5 parts by mass, even more preferably 0.7 parts by mass, and still even more preferably 0.9 parts by mass. When the content of the acid-modified propylene-based polymer (B) in the olefin-based resin composition is equal to or more than a certain amount, the dispersibility of the metal oxide (C) in the resin composition can be increased well, and appearance, heat resistance, surface hardness, and mechanical strength of a molded article can be further improved.

The upper limit of the content of the acid-modified propylene-based polymer (B) is 15 parts by mass, preferably 12 parts by mass, more preferably 10 parts by mass, even more preferably 8 parts by mass, still even more preferably 7 parts by mass, and particularly preferably 5 parts by mass.

When the content of the acid-modified propylene-based polymer (B) in the olefin-based resin composition of the present invention is equal to or less than a certain amount, the dispersibility of the metal oxide (C) in the resin composition can be increased well, appearance, heat resistance, surface hardness, and mechanical strength of a molded article can be further improved, and the processability and kneadability of the resin composition become better.

In the olefin-based resin composition of the present invention, when the total amount of (A) + (B) + (C) + (D) is 100 parts by mass, the content of the acid-modified propylene-based polymer (B) is desirably such that the amount of unsaturated carboxylic acid contained in the acid-modified propylene-based polymer (B) satisfies a range of preferably 0.002 to 0.42 parts by mass, more preferably 0.005 to 0.35 parts by mass, and even more preferably 0.01 to 0.1 parts by mass. The content of the unsaturated carboxylic acid falling within the above range is suitable because compatibility and adhesiveness between the unmodified olefin-based polymer (A) and the metal oxide (C) in the olefin-based resin composition of the present invention are enhanced, and therefore a molded article excellent in texture and strength, is easily obtained from the resin composition.

On the other hand, when the total amount of (A) + (B) + (C) is 100 parts by mass, the lower limit of the content of the metal oxide (C) is preferably 57 parts by mass, more preferably 60 parts by mass, even more preferably 63 parts by mass, and still even more preferably 69 parts by mass.

In addition, the upper limit of the content of the metal oxide (C) is preferably 88 parts by mass, more preferably 86 parts by mass, even more preferably 84 parts by mass, and still even more preferably 78 parts by mass.

The olefin-based resin composition of the present invention contains 0.1 to 10 parts by mass of the unmodified polyolefin-based wax (D) relative to 100 parts by mass of the total (total of (A) + (B) + (C)) of the unmodified olefin-based polymer (A), the acid-modified propylene-based polymer (B), and the metal oxide (C). The lower limit of the content of the unmodified polyolefin-based wax (D) is preferably 0.2 parts by mass, more preferably 0.4 parts by mass, and even more preferably 0.5 parts by mass.

Moreover, the upper limit of the content of the unmodified polyolefin-based wax (D) is preferably 8 parts by mass, more preferably 6 parts by mass, and even more preferably 4 parts by mass.

When the olefin-based resin composition of the present invention contains the unmodified polyolefin-based wax (D) in the above range, it is possible to improve kneadability by decreasing the mold torque during molding when obtaining the olefin-based resin composition and when using the olefin-based resin composition to perform the molding process. In addition, having a lower melt temperature than the olefin-based polymer (A) allows it to act as a lubricant and to prevent screw and cylinder wear.

On the other hand, since the olefin-based resin composition of the present invention does not contain a modified polyolefin-based wax, there is no risk of generating strange odors during the molding process.

Furthermore, the molded article obtained from the olefin-based resin composition of the present invention containing the unmodified polyolefin-based wax (D) has a harder feel and a texture closer to that of earthenware than a molded article obtained from a composition containing a modified polyolefin-based wax, and since there is no change in hydrophilicity, there is no risk of elution of the metal oxide or of causing a loss of texture.

The specific gravity of the olefin-based resin composition of the present invention is preferably in the range of 1.2 to 5.0. The lower limit of the specific gravity of the olefin-based resin composition of the present invention is more preferably 1.4, even more preferably 1.6, and particularly preferably 1.7. Moreover, the upper limit of the specific gravity is more preferably 4.0, even more preferably 3.0, and particularly preferably 2.5.

When the above range of specific gravity is satisfied, a molded article with a better texture can be obtained.

The thermal conductivity of the olefin-based resin composition of the present invention is preferably in the range of 0.5 to 5 W/mK. The lower limit of the thermal conductivity of the olefin-based resin composition of the present invention is more preferably 0.6 W/mK, even more preferably 0.65 W/mK, and particularly preferably 0.7 W/mK. Moreover, the upper limit of the thermal conductivity is more preferably 4.5 W/mK, even more preferably 4.0 W/mK, and particularly preferably 3.6 W/mK.

When the above range of thermal conductivity is satisfied, a molded article such as a container that feels cool to the touch and has a better texture can be obtained.

The olefin-based resin composition of the present invention preferably has an antibacterial activity value (water resistance classification of 0 and light resistance classification of 0) of 2.0 or more using Escherichia coli or Staphylococcus aureus, and more preferably an antibacterial activity value of 2.0 or more using Escherichia coli and Staphylococcus aureus. The antibacterial activity value of the olefin-based resin composition of the present invention can be increased, for example, by increasing the content of the metal oxide (C) (e.g., magnesium oxide). When the antibacterial activity value is 2.0 or more, it is considered to have an antibacterial effect. A higher antibacterial activity value (water resistance classification of 0 and light resistance classification of 0) is preferred as it indicates a higher antibacterial effect, and the upper limit thereof is not particularly limited.

The antibacterial activity value (water resistance classification of 0 and light resistance classification of 0) in the present invention is an index value in accordance with the test method in JIS Z 2801: 2012 "film adhesion method".

The water resistance classification of 0 is classification of 0 (the condition in which the water resistance pretreatment is not performed) in "The Society of International sustaining growth for Antimicrobial Articles, Testing method, Sustaining property testing method (2021 edition) (1) Water resistance testing". In addition, the light resistance classification of 0 is classification of 0 (the condition in which the light resistance pretreatment is not performed) in "The Society of International sustaining growth for Antimicrobial Articles, Testing method, Sustaining property testing method (2021 edition) (2) Light resistance testing".

The olefin-based resin composition of the present invention preferably has an antiviral activity value of 2.0 or more using Feline calicivirus. When the antiviral activity value is 2.0 or more, it is considered to have an antiviral effect. A higher antiviral activity value is preferred as it indicates a higher antiviral effect, and the upper limit thereof is not particularly limited.

The antiviral activity value in the present invention is an index value in accordance with the test method in ISO 21702:2019 "Measurement of antiviral activity on plastics and other non-porous surfaces".

The olefin-based resin composition of the present invention may contain various known additives, such as plasticizers, lubricants, antioxidants, ultraviolet absorbers, heat stabilizers, pigments, pigment masterbatches, dyes, antistatic agents, flame retardants, coupling agents, and dispersing agents depending on the application as long as the object of the present invention is not impaired.

### <Production method of olefin-based resin composition>

The olefin-based resin composition of the present invention is obtained by mixing each of the above components by, for example, dry blending, a Henschel mixer, a Banbury mixer, or a kneader, or by melt-kneading them after mixing in a single-screw extruder, a twin-screw extruder, or a highspeed twin-screw extruder.

### <Molded article>

The olefin-based resin composition of the present invention has excellent moldability and can therefore be used in various molding methods. Specific examples of the molded article obtained from the olefin-based resin composition of the present invention include an injection molded article, a foam molded article, an injection foam molded article, an extruded article, a hollow molded article, a vacuum/pressure formed article, a calender molded article, a three-dimensional layered shaped article, a microwave molded article, a stretched film, and an inflation film.

More specific examples include containers, for example, for food, tableware such as forks, knives, spoons, plates, teapots, and teacups, alcoholic drink ware such as tokkuri or choshi, and cutlery rests such as chopstick rests. These are very useful as tableware, alcoholic drink ware, containers, and cutlery as an alternative to ceramics in that they can be easily molded by injection molding, they allow to feel the warm/cold sensation of the contents, and appear heavy. It is also possible to expand to other applications using ceramics, for example, everyday items such as lampshades and vases, cases and structural materials for specific acoustic speakers (such as high-end speakers), plumbing products such as sinks and toilet bowls, and vases and pots for plants. In addition to applications using ceramics, its characteristics of imparting a heavy feeling and stability can be used to expand to applications such as models and toys typified by plastic models, furniture such as desks and chairs, home appliances such as refrigerators, rice cookers and vacuum cleaners, musical instruments such as piano keyboards, constructions such as tiles, artificial marble alternatives, and building materials, and fashion materials such as buttons. It may also be suitable as a filament for 3D printers by utilizing its warm/cold sensation and moldability.

In addition, the molded article of the present invention can be suitably used in places that are touched by hands on a daily basis, and examples thereof include various containers such as bottles and jars, steering and shift knobs for vehicles and ships, door handles and door knobs, various switches, handrails, mice, keyboards, controllers, decorative accessories, stationery (e.g., mechanical pencils, ballpoint pens, and fountain pens), smartphone covers, tablet covers, computer/tablet/smartphone cases, various home appliance cases, beauty home appliance cases, domestic home appliance cases, power storage devices (for example, battery cases), book covers, wallpaper, wall materials, floor materials, building materials, toilet bowls, and toilet articles using its characteristics such as designability, stability, antibacterial properties, and feel.

Suitable examples of containers include containers for beauty-related products such as cosmetics (such as lotions and creams), shampoo (including body shampoo), and rinse, where these performances tend to have a high impact on the commercial value. More specific examples include lidded containers (including airless containers), containers in the form of compacts (for cosmetics), palettes (for cosmetics), and bottles.

In recent years, containers made of plastic such as polyolefin, which are lightweight and have excellent impact resistance, have been used in most of these applications, but it is an unsuitable material for producing a premium look and feel (including thermal conductivity and heavy feeling). Containers such as ceramics are suitable for producing a premium appearance, but they have major problems such as limited flexibility in terms of designability and mass production, as well as low impact resistance.

Since the same molding methods as conventional plastic products can be applied to the container of the present invention, it can be considered suitable for the above applications not only because of its superior productivity and designability, but also because it has superior impact resistance compared to ceramics and has the same weight feeling and thermal conductivity as ceramics.

Furthermore, the molded article obtained from the olefin-based resin composition of the present invention is also useful as a heat-dissipating member in applications requiring high thermal conductivity. For example, it is very useful as a heat-dissipating member such as a heat-dissipating sheet in electronic components requiring high thermal conductivity and in various electronic devices such as notebook computers and mobile devices. In addition, if the olefin-based resin composition of the present invention is applied to part or all of the cases of various electronic devices such as notebook computers and mobile devices, and used in combination with heat-dissipating sheets, the heat dissipation performance of electronic devices can be expected to be further enhanced. Furthermore, it is possible to produce a case that can reduce the possibility of suffering, for example, from low temperature burn during prolonged manipulation by using the olefin-based resin composition of the present invention for a part of the case of various electronic devices such as notebook computers and mobile devices, and using a material with a reduced metal oxide content or a material free of metal oxide for the other parts, for example, the parts that are often in contact with the hands during manipulation. Such a case can be produced, for example, by a method of installing a plurality of resin injection gates in a mold for molding the case and injecting resin of different composition into each gate.

As another application, it is also useful as an alternative material for metal cases by making use of, for example, its excellent thermal conductivity, freedom of shape during molding, and high impact strength. For example, it can be expected to be expanded to watch and wristwatch cases and belts, furniture parts (e.g., metal handles), and exterior materials for home appliances such as washing machines and refrigerators.

### EXAMPLES

Hereinafter, the present invention will be more specifically described by way of Examples, but the present invention is not limited to the following Examples as long as the gist of the present invention is not exceeded. Each material used in the Examples is as follows. The evaluation method for each property is described below.

### (1) Unmodified olefin-based polymer (A)

The olefin-based resins (A) used in the Examples and Comparative Examples are shown below.
(1-1) Propylene-based polymer (A2-1): Propylene-ethylene block copolymer (manufactured by Prime Polymer Co., Ltd., trade name J-6083HP, MFR (230°C, 2.16 kg load) = 60 g/10 min, density = 900 kg/m³)
(1-2) Ethylene-based polymer (A1-1): Ethylene-1-butene copolymer (manufactured by Mitsui Chemicals, Inc., TAFMER (registered trademark) trade name A-35070S, MFR (190°C, 2.16 kg load) = 35 g/10 min, MFR (230°C, 2.16 kg load) = 65 g/10 min, density = 870 kg/m³)

### (2) Acid-modified propylene-based polymer (B)

As the acid-modified propylene-based polymer (B) used in Examples and Comparative Examples, one produced by the method described below was used.

### (2-1) Acid-modified propylene-based polymer (B-1)

To 100 parts by mass of polypropylene (manufactured by Prime Polymer Co., Ltd., Prime Polypro (trade name) grade E-200 GP), 1 part by mass of maleic anhydride (manufactured by Wako Pure Chemical Industries, Ltd.) and 0.25 parts by mass of 2,5-dimethyl-2,5-bis(tert-butyl peroxy)hexyne-3 (manufactured by NOF CORPORATION, trade name PERHEXYNE 25B) were mixed and extruded using a biaxial kneader (manufactured by The Japan Steel Works, Ltd., TEX-30, L/D = 40, use of vacuum venting) at a cylinder temperature of 220°C, a number of rotations of the screw of 200 rpm, and an injection amount of 80 g/min, to obtain an acid-modified propylene-based polymer (B-1) containing maleic acid-modified polypropylene and unreacted maleic anhydride. The obtained polymer (B-1) was dissolved in xylene, and was re-precipitated in acetone for purification. The graft amount of maleic anhydride measured by IR was 0.7 mass%. The number-average molecular weight (Mn) measured by GPC was 28,000. The density was 910 kg/m³.

### (2-2) Acid-modified propylene-based polymer (B-2)

To 100 parts by mass of polypropylene (manufactured by Prime Polymer Co., Ltd., Prime Polypro (trade name) grade J106G), 15 parts by mass of maleic anhydride (manufactured by Wako Pure Chemical Industries, Ltd.) and 2.5 parts by mass of dicumyl peroxide (manufactured by NOF CORPORATION, trade name PERCUMYL D) were mixed and were allowed to react in a toluene solution for 5 hours, to obtain an acid-modified propylene-based polymer (B-2) containing maleic acid-modified polypropylene and unreacted maleic anhydride. The obtained polymer (B-2) was dissolved in xylene, and was re-precipitated in acetone for purification. The graft amount of maleic anhydride measured by IR was 2.8 mass%. The number-average molecular weight (Mn) measured by GPC was 18,000. The density was 910 kg/m³.

### (3) Metal oxide (C)

The metal oxides (C) used in the Examples and Comparative Examples are shown below.
(3-1) Magnesium oxide (C1-1): MgO (manufactured by Kyowa Chemical Industry, PYROKISUMA 3320, average particle size = 20 µm).
(3-2) Magnesium oxide (C1-2): MgO (manufactured by Ube Material Industries, Ltd., RF-10CS, average particle size = 5.0 µm)
(3-3) Aluminum oxide (C2-1): Alumina (Denka Company Limited, DENKA SPHERICAL ALUMINA DAM-45, average particle size = 42.8 µm)

### (4) Unmodified polyolefin-based wax (D)

The unmodified polyolefin-based wax (D) used in the Examples and Comparative Examples is shown below.
(4-1) Unmodified polyolefin-based wax (D-1): Ethylene-1-butene copolymer (manufactured by Mitsui Chemicals, Inc., trade name EXCEREX 30050B, density = 907 kg/m³, acid value = 0 mg KOH/g, melting point = 91°C, weight-average molecular weight = 5100, molecular weight distribution Mw/Mn = 2.6)

### (5) Modified polyolefin-based wax

(5-1) Modified polyolefin-based wax: Modified polyolefin polymer (manufactured by Mitsui Chemicals, Inc., trade name EXCEREX 15341PA, density = 930 kg/m³, acid value = 14 mg KOH/g, melting point = 89°C)

### -Measurement/evaluation methods of physical properties

Physical properties of the olefin-based resin compositions prepared in Examples and Comparative Examples were measured by the following methods. The specific gravity and melt flow rate (MFR) were measured using resin composition pellets, and the other physical properties were measured using samples for physical property test.

### [Specific gravity]

The specific gravity was measured by relative comparison with the density of water at 4°C by the substitution in water method.

### [Melt flow rate (MFR) (g/10 min)]

In accordance with ASTM D1238, an AUTO MELTS INDEXER TP-407 manufactured by TESTER SANGYO CO., LTD., was used, and measurement was performed under the conditions of a temperature of 230°C and a load of 2.16 kg and under the conditions of a temperature of 230°C and a load of 5 kg.

### [Tensile strength and stretch at break]

In accordance with JIS K6251, measurement was performed using Strograph VG1F manufactured by Toyo Seiki Seisaku-sho, Ltd., with a sample shape of JIS No. 3 being used, under the conditions of a test speed of 500 mm/min, a distance between grippers of 55 mm, a gauge length of 20 mm, and a test temperature of 23°C.

Regarding the measurement of the stretch at break, a gauge line tracking device was attached to a test piece during the measurement of tensile strength, to measure a rate of the stretch at break.

### [IZOD impact strength]

In accordance with ASTM D256, using a digital impact tester DG-IB manufactured by Toyo Seiki Seisaku-sho, Ltd., a test piece (63 mm × 13 mm × 2 mm thick, including notch) was used to perform measurement under the conditions of a hammer capacity of 3.92 J, a swing angle of 148.9°, and a test temperature of 23°C.

### [Rockwell hardness]

In accordance with JIS K7202-2 (ISO2039-2), using an automatic Rockwell hardness testing machine HR-523 manufactured by Mitutoyo Corporation, a test piece (three press sheets having a thickness of 2 mm were layered) was used to perform measurement under the conditions of scale HRR, a test pressure of 588.4 N, and a test temperature of 23°C.

### [Charpy impact]

In accordance with JIS K7111-1, using a digital impact tester DG-UB manufactured by Toyo Seiki Seisaku-sho, Ltd., a test piece (80 mm × 10 mm × 2 mm thick, without notch) was used to perform measurement under the conditions of a hammer capacity of 2 J, a swing angle of 148.9°, and a test temperature of 23°C.

### [Bending strength, bending stress, and bending elastic modulus]

In accordance with ASTM D790, using a five-stage bending testing machine AG-1kNX plus manufactured by Shimadzu Corporation, a test piece (65 mm × 14 mm × 2 mm thick) was used to measure the bending strength, bending stress, and bending elastic modulus under the conditions of a distance between supporting points (distance between spans 16 times the thickness) of 32 mm, a test speed of 5 mm/min, and a test temperature of 23°C.

### [Pencil hardness]

In accordance with JIS K5600-56, a pencil scratch hardness tester SH-V manufactured by Toyo Seiki Seisaku-sho, Ltd. was used to perform measurement under the conditions of a load of 750 g.

### [Coefficient of thermal expansion]

In accordance with JIS K 7197, TMA-SS7100 manufactured by SII Nano Technology Inc. was used to perform measurement in the compression/expansion mode under the conditions of the TMA method (no annealing), the measurement temperature range: 23°C to 60°C, the test load: 26 mN, and the temperature increase rate: 5°C/min.

### [Measurement of deflection temperature under load (°C)]

In accordance with the method A of ISO 75-2, using an automatic HDT testing machine 6A-2 type manufactured by Toyo Seiki Seisaku-sho, Ltd., a test piece (80 mm x 10 mm x 2 mm thick) was used to perform measurement under the conditions of a temperature increase rate of 120°C/hour, a test starting temperature: 35°C, and a bending stress of 1.80 MPa.

### [Thermal conductivity (W/m·K)]

In accordance with ASTM E1530, a steady method thermal conductivity measurement system GH-1 manufactured by ULVAC-RIKO was used to measure a sample (50 mm in diameter × 2 mm thick) under the conditions of an air pressure set for holding samples of 0.3 MPa and a set temperature of 30°C.

### [Water absorption rate (wt%)]

The water absorption rate was measured at 23°C for 24 hours.

### [Examples 1 to 3]

The propylene-based polymer (A2-1), the ethylene-based polymer (A1-1), the acid-modified propylene-based polymer (B-1), the magnesium oxide (C1-1), and the unmodified polyolefin-based wax (D-1) as raw materials were introduced into a kneading device (desktop kneader (manufactured by IRIE SHOKAI Co., Ltd)) so that the formulation described in Table 1 was obtained, and were kneaded under the conditions of 200°C and 15 to 35 rpm, to obtain a pellet of a thermoplastic resin composition. The resulting pellets of thermoplastic resin compositions were made into press sheets having a predetermined thickness at 200°C using a manual hydraulic heat press machine (manufactured by Imoto Machinery Co., LTD), which were cut into a predetermined shape, to obtain samples for testing physical properties. The resulting sheets, for example, were used to measure the physical properties by the methods described above. The results are shown in Table 1.

### [Examples 4 to 6]

Pellets of thermoplastic resin compositions and samples for testing were produced in the same manner as in Example 1 and the physical properties were measured by the above methods, except that the propylene-based polymer (A2-1), the ethylene-based polymer (A1-1), the acid-modified propylene-based polymer (B-2), the magnesium oxide (C1-1), and the unmodified polyolefin-based wax (D-1) as raw materials were introduced into a kneading device (desktop kneader (manufactured by IRIE SHOKAI Co.,Ltd)) so that the formulation described in Table 1 was obtained. The results are shown in Table 1.

### [Comparative Example 1]

A pellet of a thermoplastic resin composition and a sample for testing were produced in the same manner as in Example 1 and the physical properties were measured by the above methods, except that 68 parts by mass of the propylene-based polymer (A2-1), 2.0 parts by mass of the ethylene-based polymer (A1-1), 30 parts by mass of the magnesium oxide (C-1), and 0.6 parts by mass of the unmodified polyolefin-based wax (D-1) as raw materials were introduced into a kneading device (desktop kneader (manufactured by IRIE SHOKAI Co.,Ltd)). The results are shown in Table 1.

The composition obtained by Comparative Example 1 does not provide a texture like earthenware and a premium texture because it has low thermal conductivity and does not easily transmit heat. Furthermore, since the content of the metal oxide (C) was small, the surface hardness and the deflection temperature under load (1.80 MPa) were significantly reduced, making the composition difficult to be used on a daily basis.

### [Comparative Example 2]

A pellet of a thermoplastic resin composition and a sample for testing were produced in the same manner as in Example 1 and the physical properties were measured by the above methods, except that 23 parts by mass of the propylene-based polymer (A2-1), 2.0 parts by mass of the ethylene-based polymer (A1-1), 75 parts by mass of the magnesium oxide (C-1), and 0.6 parts by mass of the modified polyolefin-based wax as raw materials were introduced into a kneading device (desktop kneader (manufactured by IRIE SHOKAI Co.,Ltd)). The results are shown in Table 1.

The composition obtained by Comparative Example 2 had a lower deflection temperature under load and lower physical properties. This is thought to be because the acid value of the modified polyolefin-based wax is low, resulting in weak hydrogen bonds with the metal oxide (hereinafter also referred to as filler), and the filler is not uniformly dispersed in the resin. On the other hand, it is thought that while the unmodified polyolefin-based wax (D) used in the Examples had an acid value of 0, resulting in weak hydrogen bonds with the filler, the interaction with a small amount of the acid-modified propylene-based polymer (B) acting as a binder was stronger, and therefore the deflection temperature under load and physical properties of the resulting composition were good.

### [Comparative Example 3]

A pellet of a thermoplastic resin composition and a sample for testing were produced in the same manner as in Example 1 and the physical properties were measured by the above methods, except that 23 parts by mass of the propylene-based polymer (A2-1), 2.0 parts by mass of the ethylene-based polymer (A1-1), and 75 parts by mass of the magnesium oxide (C-1) as raw materials were introduced into a kneading device (desktop kneader (manufactured by IRIE SHOKAI Co.,Ltd)). The results are shown in Table 1.

Since the composition obtained by Comparative Example 3 did not contain the acid-modified propylene-based polymer (B) and the unmodified polyolefin-based wax (D), the filler tended to agglomerate and was difficult to disperse uniformly, making it difficult to produce and uneven, resulting in inferior kneadability and resin fluidity (MFR).

### [Example 7]

A pellet of a thermoplastic resin composition and a sample for testing were produced in the same manner as in Example 1 and the physical properties were measured by the above methods, except that the propylene-based polymer (A2-1), the ethylene-based polymer (A1-1), the acid-modified propylene-based polymer (B-1), the aluminum oxide (C2-1), and the unmodified polyolefin-based wax (D-1) as raw materials were introduced into a kneading device (desktop kneader (manufactured by IRIE SHOKAI Co.,Ltd)) so that the formulation described in Table 1 was obtained. The results are shown in Table 1.

### [Example 8]

A pellet of a thermoplastic resin composition and a sample for testing were produced in the same manner as in Example 1 and the physical properties were measured by the above methods, except that the propylene-based polymer (A2-1), the ethylene-based polymer (A1-1), the acid-modified propylene-based polymer (B-2), the aluminum oxide (C2-1), and the unmodified polyolefin-based wax (D-1) as raw materials were introduced into a kneading device (desktop kneader (manufactured by IRIE SHOKAI Co.,Ltd)) so that the formulation in Table 1 was obtained. The results are shown in Table 1.

### [Comparative Example 4]

A pellet of a thermoplastic resin composition and a sample for testing were produced in the same manner as in Example 1 and the physical properties were measured by the above methods, except that the propylene-based polymer (A2-1), the ethylene-based polymer (A1-1), the aluminum oxide (C2-1), and the unmodified polyolefin-based wax (D-1) as raw materials were introduced into a kneading device (desktop kneader (manufactured by IRIE SHOKAI Co.,Ltd)) so that the formulation in Table 1 was obtained. The results are shown in Table 1.

Since the composition obtained in Comparative Example 4 did not contain the acid-modified propylene-based polymer (B), it is presumed that the affinity between the metal oxide and the resin component was lower than that of the composition in Example 8. Therefore, the strength and hardness were low, resulting in poor mechanical physical properties, and the deflection temperature under load was low, resulting in poor heat resistance.

### [Example 9]

A pellet of a thermoplastic resin composition and a sample for testing were produced in the same manner as in Example 1 and the physical properties were measured by the above methods, except that the propylene-based polymer (A2-1), the acid-modified propylene-based polymer (B-1), the magnesium oxide (C1-2), and the unmodified polyolefin-based wax (D-1) as raw materials were introduced into a kneading device (desktop kneader (manufactured by IRIE SHOKAI Co.,Ltd)) so that the formulation described in Table 1 was obtained. The results are shown in Table 1.

### [Table 1]

**Table 1**

| | | | | Example 1 | Example 2 | Example 3 | Example 4 | Example 5 | Example 6 | Comparative Example 1 |
|---|---|---|---|---|---|---|---|---|---|---|
| Unmodified olefin-based polymer (A) | Propylene-based polymer (A2) | (A2-1) | Part(s) by mass | 22.0 | 22.0 | 20.0 | 22.0 | 22.0 | 22.0 | 68.0 |
| | Ethylene-based polymer (A1) | (A1-1) | Part(s) by mass | 2.0 | 2.0 | 2.0 | 2.0 | 2.0 | 2.0 | 2.0 |
| | | Subtotal | Part(s) by mass | 24.0 | 24.0 | 22.0 | 24.0 | 24.0 | 24.0 | 70.0 |
| Acid-modified propylene-based polymer (B) | | (B-1) | Part(s) by mass | 1.0 | 1.0 | 3.0 | | | | |
| | | (B-2) | Part(s) by mass | | | | 1.0 | 1.0 | 1.0 | |
| | | Subtotal | Part(s) by mass | 1.0 | 1.0 | 3.0 | 1.0 | 1.0 | 1.0 | 0.0 |
| Metal oxide (C) | Magnesium oxide (C1) | (C1-1) | Part(s) by mass | 75.0 | 75.0 | 75.0 | 75.0 | 75.0 | 75.0 | 30.0 |
| | | (C1-2) | Part(s) by mass | | | | | | | |
| | Aluminum oxide (C2) | (C2-1) | Part(s) by mass | | | | | | | |
| | | Subtotal | Part(s) by mass | 75.0 | 75.0 | 75.0 | 75.0 | 75.0 | 75.0 | 30.0 |
| | | Total | Part(s) by mass | 100 | 100 | 100 | 100 | 100 | 100 | 100 |
| Unmodified polyolefin-based wax (D) | (D-1) | | Part(s) by mass | 2.0 | 0.6 | 0.6 | 0.6 | 1.0 | 2.0 | 0.6 |
| Another component | Modified polyolefin-based wax | | Part(s) by mass | | | | | | | |
| Content of unsaturated carboxylic acid | | | Part(s) by mass | 0.007 | 0.007 | 0.021 | 0.028 | 0.028 | 0.027 | 0 |
| Mechanical physical properties | Specific gravity | | - | 1.96 | 1.98 | 1.98 | 2.00 | 1.99 | 1.97 | 1.16 |
| | MFR (230°C, 2.16 kgf) | | g/10 min | 37.0 | 18.8 | 25.5 | 18.9 | 23.4 | 26.2 | 58.4 |
| | MFR (230°C, 5 kgf) | | | 116 | 62.9 | 85 | 66.3 | 79.6 | 89.1 | 232 |
| | Tensile strength | | MPa | 12.48 | 22.67 | 24.58 | 19.1 | 23.32 | 19.6 | 21.13 |
| | Stretch at break | | % | 2 | 5 | 4 | 2 | 4 | 3 | 17 |
| | IZOD impact strength | | J/m | 16.9 | 22.44 | 37.42 | 29.76 | 38.58 | 33.95 | 25.66 |
| | Rockwell hardness | | - | 56.2 | 68.9 | 70.9 | 61.9 | 82.7 | 75.9 | 73.5 |
| | Charpy impact | | KJ/m² | 5.69 | 3.44 | 23.98 | 14.74 | 15.66 | 20.99 | (35.6) Not broken |
| | Bending strength | | N | 32.1 | 46.63 | 43.91 | 54.12 | 49.52 | 45.14 | 30.5 |
| | Bending stress | | MPa | 32.9 | 42.94 | 45.71 | 44.03 | 46.02 | 42.64 | 35.95 |
| | Bending elastic modulus | | MPa | 4098.6 | 3555.4 | 4064.2 | 4017.6 | 4881.7 | 4467.9 | 1896 |
| | Pencil hardness | | Shiny/matte | H | 4H | 4H | 2H | 3H | 3H | 3B |
| Thermal characteristics | Coefficient of thermal expansion | | ×10⁻⁵/°C | 8.47 | 6.54 | 6.83 | 6.16 | 6.5 | 7.02 | 10.3 |
| | Deflection temperature under load (1.80 MPa) | | °C | 72 | 101.7 | 83.7 | 93 | 82 | 75 | Unmeasurable due to excess deflection |
| | Thermal conductivity | | W/m•k | 0.92 | 1.15 | 0.97 | 1.12 | 0.99 | 1.07 | 0.32 |
| Chemical characteristics | Water absorption rate | | wt% | 0 | 0.01 | 0.01 | 0.03 | 0 | 0 | 0.01 |

**Table 1 (continued)**

| | | | | Comparative Example 2 | Comparative Example 3 | Example 7 | Example 8 | Comparative Example 4 | Example 9 |
|---|---|---|---|---|---|---|---|---|---|
| Unmodified olefin-based polymer (A) | Propylene-based polymer (A2) | (A2-1) | Part(s) by mass | 23.0 | 23.0 | 20.0 | 22.0 | 23.0 | 24.0 |
| | Ethylene-based polymer (A1) | (A1-1) | Part(s) by mass | 2.0 | 2.0 | 2.0 | 2.0 | 2.0 | 0 |
| | | Subtotal | Part(s) by mass | 25.0 | 25.0 | 22.0 | 24.0 | 25.0 | 24.0 |
| Acid-modified propylene-based polymer (B) | | (B-1) | Part(s) by mass | | | 3.0 | | | 1.0 |
| | | (B-2) | Part(s) by mass | | | | 1.0 | | |
| | | Subtotal | Part(s) by mass | 0.0 | 0.0 | 3.0 | 1.0 | 0.0 | 1.0 |
| Metal oxide (C) | Magnesium oxide (C1) | (C1-1) | Part(s) by mass | 75.0 | 75.0 | | | | |
| | | (C1-2) | Part(s) by mass | | | | | | 75.0 |
| | Aluminum oxide (C2) | (C2-1) | Part(s) by mass | | | 75.0 | 75.0 | 75.0 | |
| | | Subtotal | Part(s) by mass | 75.0 | 75.0 | 75.0 | 75.0 | 75.0 | 75.0 |
| | | Total | Part(s) by mass | 100 | 100 | 100 | 100 | 100 | 100 |
| Unmodified polyolefin-based wax (D) | (D-1) | | Part(s) by mass | | | 0.6 | 0.6 | 0.6 | 2.0 |
| Another component | Modified polyolefin-based wax | | Part(s) by mass | 0.6 | | | | | |
| Content of unsaturated carboxylic acid | | | Part(s) by mass | 0.009 | 0 | 0.021 | 0.021 | 0 | 0.007 |
| Mechanical physical properties | Specific gravity | | - | 1.99 | 2.00 | 2.12 | 2.00 | 2.10 | 2.02 |
| | MFR (230°C, 2.16 kgf) | | g/10 min | 15.1 | 14.9 | 17.8 | 12.7 | 0.44 | 17.4 |
| | MFR (230°C, 5 kgf) | | | 59.1 | 62 | 104 | 60.9 | 47.2 | No data |
| | Tensile strength | | MPa | 8.75 | 9.43 | 22.62 | 22.91 | 8.48 | 23.8 |
| | Stretch at break | | % | 20 | 9 | 4 | 5 | 16 | 3 |
| | IZOD impact strength | | J/m | 18.6 | 18.33 | 39.56 | 31.72 | 19.84 | 48.39 |
| | Rockwell hardness | | - | 44 | 57.5 | 83.0 | 80.7 | 48.0 | 95.0 |
| | Charpy impact | | KJ/m² | 6.50 | 11.31 | 27.62 | 15.64 | 8.65 | 41.20 |
| | Bending strength | | N | 17.5 | 27.0 | 49.1 | 37.78 | 17.99 . | 60.0 |
| | Bending stress | | MPa | 17.54 | 20.5 | 47.09 | 40.49 | 17.9 | 55.00 |
| | Bending elastic modulus | | MPa | 2695 | 4637 | 4165.7 | 3963.8 | 2833.9 | 5781.6 |
| | Pencil hardness | | Shiny/matte | HB | 2H | 3H | 3H | HB | 3H |
| Thermal characteristics | Coefficient of thermal expansion | | ×10⁻⁵/°C | 6.19 | 5.14 | 7.35 | 7.58 | 7.62 | 8.61 |
| | Deflection temperature under load (1.80 MPa) | | °C | 52.6 | 76.7 | 85.4 | 80.3 | 53.9 | 94.5 |
| | Thermal conductivity | | W/m•k | 1.43 | 1.25 | 0.93 | 0.79 | 0.86 | 1.03 |
| Chemical characteristics | Water absorption rate | | wt% | 0 | 0 | 0.01 | 0.01 | 0.01 | 0.01 |

## Claims

1. An olefin-based resin composition comprising:
9.7 to 36 parts by mass of an unmodified olefin-based polymer (A),
0.3 to 15 parts by mass of an acid-modified propylene-based polymer (B), and
54 to 90 parts by mass of a metal oxide (C), provided that a total amount of the unmodified olefin-based polymer (A), the acid-modified propylene-based polymer (B), and the metal oxide (C) is 100 parts by mass; and
0.1 to 10 parts by mass of an unmodified polyolefin-based wax (D), relative to a total of 100 parts by mass of the unmodified olefin-based polymer (A), the acid-modified propylene-based polymer (B), and the metal oxide (C).

2. The olefin-based resin composition according to claim 1, wherein the unmodified olefin-based polymer (A) is one or more selected from the group consisting of ethylene-based polymers, propylene-based polymers, 1-butene-based polymers, and 4-methyl-1-pentene-based polymers.

3. The olefin-based resin composition according to claim 1, wherein the metal oxide (C) includes magnesium oxide.

4. The olefin-based resin composition according to claim 1, wherein a thermal conductivity of the metal oxide (C) is within a range of 10 to 300 W/mK.

5. The olefin-based resin composition according to claim 1, wherein a thermal conductivity of the olefin-based resin composition is within a range of 0.5 to 5 W/mK.

6. The olefin-based resin composition according to claim 1, wherein a specific gravity of the olefin-based resin composition is within a range of 1.2 to 5.0.

7. The olefin-based resin composition according to claim 1, wherein a content of an unsaturated carboxylic acid in the olefin-based resin composition is 0.002 to 0.42 parts by mass, relative to a total of 100 parts by mass of the unmodified olefin-based polymer (A), the acid-modified propylene-based polymer (B), the metal oxide (C), and the unmodified polyolefin-based wax (D).

8. A molded article comprising the olefin-based resin composition according to any one of claims 1 to 7.

9. A door handle, door knob, handrail or switch comprising the olefin-based resin composition according to any one of claims 1 to 7.

10. A case comprising the olefin-based resin composition according to any one of claims 1 to 7.

11. A power storage device comprising the olefin-based resin composition according to any one of claims 1 to 7.

12. A fashion accessory comprising the olefin-based resin composition according to any one of claims 1 to 7.

13. Stationery comprising the olefin-based resin composition according to any one of claims 1 to 7.

14. A container, tableware, or alcoholic drink ware comprising the olefin-based resin composition according to any one of claims 1 to 7.

15. A mouse or keyboard comprising the olefin-based resin composition according to any one of claims 1 to 7.
